# EUROPÄISCHE PATENTSCHRIFT

(11) **EP 0 387 865 B1**
(45) Veröffentlichungstag und Bekanntmachung des Hinweises auf die Patenterteilung: **11.05.1994**
(21) Anmeldenummer: 90104869.4
(22) Anmeldetag: 15.03.1990
(51) Int. Cl.: H01T 4/14

(54) **Funkenschutzeinrichtung für isolierte Leitungen, insbesondere Freileitungen**
Spark protection device for insulated conductors, particularly for air lines
Dispositif de protection contre des étincelles pour conducteurs isolés, en particulier pour lignes aériennes

(30) Priorität: 17.03.1989 FI 891267
(43) Veröffentlichungstag der Anmeldung: 19.09.1990
(73) Patentinhaber: OY SEKKO AB, 06100 Porvoo (FI)
(72) Erfinder: Harri, Turunen, SF-06100 Porvoo (FI); Hannu, Teirikangas, SF-06150 Porvoo (FI)
(74) Vertreter: Becker, Maria, Dipl.-Phys.

(56) Entgegenhaltungen:
- US-A- 1 513 193
- US-A- 1 914 394
- US-A- 2 560 136
- US-A- 2 777 096

## Beschreibung

Die vorliegende Erfindung betrifft eine Funkenschutzeinrichtung für mit einer Isolierschicht versehene Leitungen, insbesondere Freileitungen, wie sie im Oberbegriff des Patentanspruchs 1 angegeben ist.

An die Zuverlässigkeit der Stromversorgung und an die Übertragungssicherheit werden stets zunehmend höhere Anforderungen gestellt. Ein mittelhohe Spannungen führendes Leitersystem ist durch umfallende Bäume, Lasten von Eis und Schnee sowie durch klimatisch bedingte Überspannungen leicht anfällig.

Um die Betriebssicherheit von Freileitungen zu erhöhen, wurden teilweise isolierte Hochspannungsleitungen (OESI-Leiter) für mittlere Spannungsbereiche, z.B. 20 kV, entwickelt. Diese Leitungen ermöglichen kurze Phasenintervalle im Vergleich zu offenen, nicht isolierten Leitungen, und damit eine höhere Energiedichte. Isolierte Leitungen gestatten auch kürzere Abstände zu Gebäuden, Bäumen u.dgl.. Dies führt zu engeren Leitungsnetzen und daher auch zu wirtschaftlicheren Konstruktionen.

Wetterbedingte Funkenüberschläge verursachen Schäden an isolierten Freileitungen. Selbst kurzzeitige elektrische Funkenüberschläge (ein paar kA) reichen aus, um isolierte Leitungen zu beschädigen. Dies kann nicht durch Einstellung von Relaisabfallzeiten verhindert werden, sondern der Funkenschutz muss durch andere Massnahmen erreicht werden.

Ein Funkenschutz von Freileitungen muss dort vorgenommen werden, wo der Bruch einer Leitung für die Umwelt und die Bevölkerung schwere Folgen haben kann, z.B. in Wohngebieten, an Kreuzungen u.dgl.. Ferner muss man einen Funkenschutz dort vorsehen, wo Überspannungen auftreten.

Heute werden Funkenschutzeinrichtungen an einem oder an beiden Enden eines von der Isolierung befreiten Teils eines jeden Stromleiters an einem Leitungsbefestigungspunkt installiert. Der Funkenschutz sieht vor, dass die Leitung am kritischen Endpunkt eines elektrischen Funkenüberschlags an Masse gelegt wird, so dass der Funken an die Funkenschutzeinrichtung gelenkt wird und nicht am Stromleiter auftritt. Jedesmal, wenn die Isolierung von dem Leiter entfernt wird (bei Installations- oder Kontaktanschlussarbeiten, zeitweiser Erdung usw.), muss die Übergangsstelle zwischen dem nackten und dem isolierten Draht mit einem Funkenschutz versehen werden. Die Grösse des Funkenschutzes muss nach dem Kurzschlußstrom des Stromnetzes (ein Teil der Netzstromversorgung) ausgewählt werden.

Während der Installation des herkömmlichen Funkenschutzes muss die harte und dicke PEX-Isolierung entfernt werden. Die Isolierung muss beim Anbringen des Leiters, z.B. auf den Stützisolator, über eine lange Strecke entfernt werden. Dies muss bei allen Verbindungen und Kreuzungspunkten vorgenommen werden, was insbesondere bei kaltem Wetter eine schwierige und aufwendige Massnahme darstellt. In Gegenden mit starken Korrosionsschäden, z.B. klimatisch bedingt, wie in Küstengebieten, oder infolge industrieller Abgase, hat die Entfernung der Isolierung des Drahtes zur Folge, dass der Leiter einer erhöhten Korrosion ausgesetzt ist.

Aus der US-A-1,513,193 ist eine kombinierte Kabelklemme mit Blitzableiter bekannt, die zum Verbinden zweier mit einer Isolierschicht versehenen Leitungen dient. Die miteinander zu verbindenden Leitungen werden jeweils zwischen zwei isolierenden Backen eingeklemmt, wobei eine elektrische Leiterbrücke vorgesehen ist, die sich mit entsprechenden Dornen durch die jeweilige Isolierung der Leiter bohrt.

Als Blitzableiter ist ein weiterer isolierter Draht vorgesehen, der von den miteinander zu verbindenden Leitern galvanisch getrennt ist und ein von seiner Isolation befreites blankes Leiterstück aufweist, das einem ebenfalls von seiner Isolation befreiten blanken Leiterabschnitt der miteinander zu verbindenden Leiter gegenüberliegt und damit eine Funkenstrecke zur Ableitung von plötzlichen Überspannungen bildet.

Aus der US-A-2,777,096 ist eine Blitzableitervorrichtung mit Funkenstrecke für zweiadrige Litzen bekannt, wie sie für Antennenzuleitungen verwendet werden. Jede Ader der Litze wird von einer elektrisch leitenden Klemmplatte mit Durchstechkontaktpunkten gegen einen Isolierkörper gedrückt. Die Klemmplatte ist dabei über die Funkenstrecke in der Blitzableitervorrichtung mit Erde verbunden.

Es ist Aufgabe der Erfindung, eine neuartige Funkenschutzeinrichtung zu schaffen, die eine sichere Stromführung in isolierten Freileitungen gewährleistet und sicherstellt.

Diese Aufgabe wird gelöst durch die kennzeichnenden Merkmale des Anspruchs 1. Weitere vorteilhafte Ausgestaltungen der Erfindung sind Gegenstand der Unteransprüche 2 bis 7.

Ein Ausführungsbeispiel der Erfindung ist im folgenden im Zusammenhang mit den anliegenden Zeichnungen näher beschrieben. Hierin zeigen:
- Fig. 1: den Einsatz einer Funkenschutzeinrichtung nach der Erfindung;
- Fig. 2: eine Funkenschutzeinrichtung nach der Erfindung in perspektivischer Darstellung;
- Fig. 3: einen Funkenschutz gemäss Fig. 2, teilweise geschnitten, in Seitenansicht, und zwar in axialer Richtung;
- Fig. 4: die gleiche Vorrichtung in Seitenansicht, um 90° gedreht;
- Fig. 5: die gleiche Funkenschutzeinrichtung in Draufsicht.

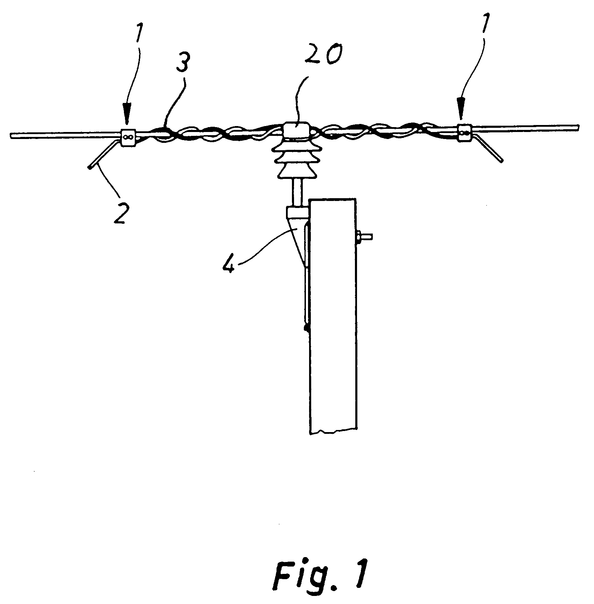

Fig. 1 zeigt zwei als Ganzes mit 1 bezeichnete Funkenschutzeinrichtungen, die an einem mit einer Isolation beschichteten, zu schützenden Leiter angebracht sind. Dieser Leiter ist mit einem Bindedraht an einem Stützisolator 20 befestigt, welcher seinerseits von einem Abstützarm 4 gehalten wird. Im vorliegenden Fall, bei welchem die elektrische Stromversorgung vorzugsweise in beiden Richtungen erfolgen soll, sind die Funkenschutzeinrichtungen 1 miteinander durch einen Aluminiumleitungsdraht 3 verbunden. Funkenableithörner 2 ragen schräg nach unten von dem zu schützenden Leiter ab. Zum Beispiel entlädt sich ein elektrischer Funken, der durch eine vom Blitz induzierte Überspannung erzeugt wird, von der Spitze des Ableithorns 2 zum Abstützarm 4 oder zwischen den Bereichen von der Spitze des einen Horns zur Spitze des anderen Horns. Falls der Leiter nur Strom in einer Richtung führt, werden Funkenschutzeinrichtungen 1 nur an derjenigen Seite des Stützisolators 20 benötigt, welche stromwärts sich vom Stützisolator in Richtung der Stromzuführung befinden.

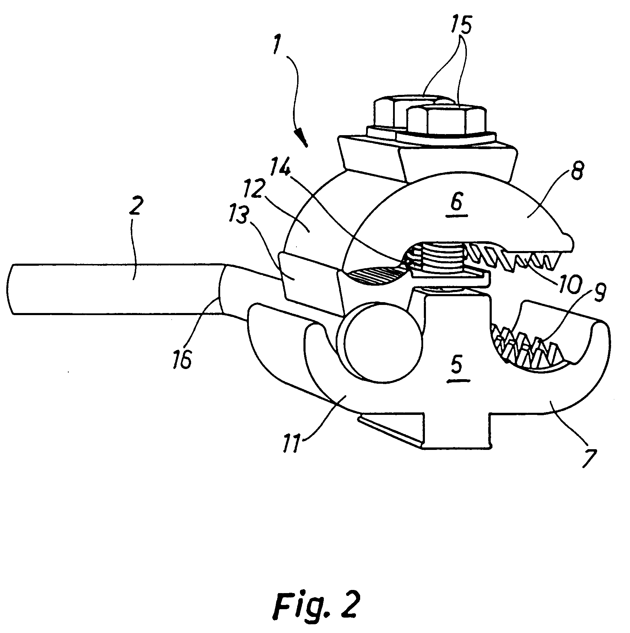

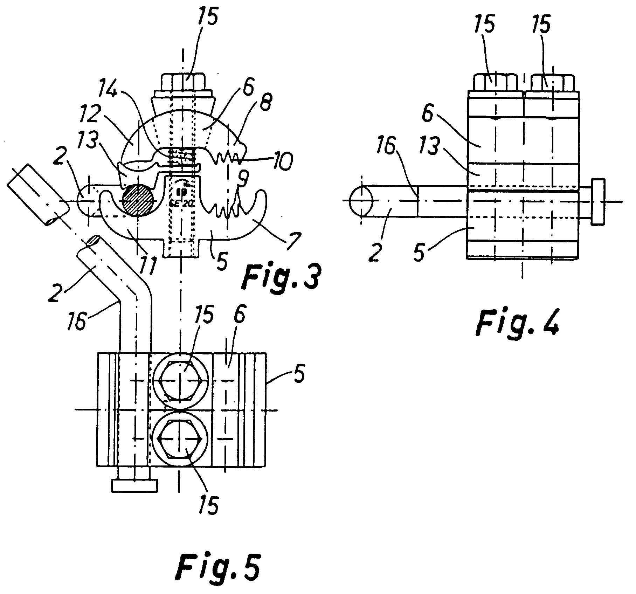

Nachfolgend wird die Funkenschutzeinrichtung nach der Erfindung näher anhand der Figuren 2 bis 5 beschrieben. Ein Bodenteil 5 und ein Deckelteil 6 sind miteinander durch zwei Spannschrauben 15 verbunden, wobei beide Teile mittels der Schrauben gegeneinander gepresst werden. Das Bodenteil 5 ist mit einer Backe 7 und das Deckelteil 6 mit einer Gegenbacke 8 ausgestattet. Ein zu schützender Leiter kann zwischen die Backen 7 und 8 gepresst werden. Um einen metallischen Kontakt bei einem isolierten Leiter durch die Isolation hindurch zu schaffen, ohne dass die Isolation entfernt werden muss, sind die Backe 7 und Gegenbacke 8 mit Zähnen 9 und 10 ausgestattet, deren Länge auf die Dicke der Isolation des zu schützenden Leiters abgestimmt ist. Selbstverständlich kann das gleiche Ergebnis auch erzielt werden, in dem nur eine der Backen mit Zähnen versehen ist.

Bodenteil 5 und Deckelteil 6 sind an der anderen, einen Seite der axialen Ebene der Spannschrauben 15 mit Backen 11 und 12 versehen. Zwischen den Backen 11 und 12 ist eine Zwischenbacke 13 angeordnet, die mit Hilfe einer Feder 14 gegen die Backe 11 des Bodenteils 5 vorgespannt ist. Ein Funkenableithorn 2 ist zwischen der Backe 11 des Bodenteils 5 und der Zwischenbacke 13 angeordnet, wobei dieses in Position gebracht und in dieser gehalten wird, ohne herauszufallen, selbst wenn die Spannschrauben 15 nicht angezogen sind und sich das Deckelteil 6 in seiner obersten Stellung befindet, wie dies in Fig. 2 dargestellt ist.

Zwischen der Mittelbacke 13 und der Backe 12 des Deckelteils 6 ist ein drittes Paar von Backen vorgesehen, zwischen denen ein Funkenableitdraht 3 fixiert werden kann.

Das Funkenableithorn 2 ist bei 16 unter einem Winkel von ca. 45° abgeknickt. Dieser Winkel kann im Bereich zwischen 30° - 90° variieren. Die Länge des Ableithorns 2 nach dem Knick 16 in Stromrichtung ist so zu dimensionieren, dass durch Funkenüberschlag bedingte Kurzschlußströme infolge Überspannung während der Nutzungsdauer des Drahtes abgefangen werden können, wobei die Länge wenigstens 80 mm, vorzugsweise mindestens 180 mm beträgt. Das Funkenableithorn 2 kann mit einer Vielzahl von Knicken versehen werden. Wichtig ist, dass der Punkt der Anfangsentladung so gesteuert werden kann, dass er sich an der Spitze des Funkenableithorns 2 befindet, welche weit genug von dem Funkenschutz selbst und dem zu schützenden Leiter entfernt ist, so dass der elektrische Funkenüberschlag den Leiter nicht beschädigt.

Die Konstruktion der Funkenschutzeinrichtung mit dem Funkenableithorn ist so zu dimensionieren, dass das Auftreten von elektrischen Funken verursacht durch Zündung, Blitz, für die Nutzungsdauer bzw. Lebensdauer des Drahtes abgefangen werden kann.

Eine Funkenschutzeinrichtung nach der Erfindung kann auch eingesetzt werden für einen vorübergehenden Erdschluss eines Leiters, wobei das Funkenableithorn 2 als Anschluss an eine Masseelektrode dient. Somit ist es auch in diesem Falle nicht erforderlich, eine mühevolle Entfernung der Isolierung zur Schaffung eines Erdungspunktes vorzunehmen. Es besteht auch keine Gefahr einen Korrosion des Drahtes, da die Drahtisolierung nicht entfernt wurde. Die Rillen zwischen den Zähnen 9 und 10 der Backen 7 und 8 können durch Verwendung von reichlichem Fett geschmiert werden, so dass die Feuchtigkeit nicht an den Leiter herankommt. Die Funkenschutzeinrichtung kann auch in einem getrennten Schutzgehäuse untergebracht werden.

Eine Funkenschutzeinrichtung nach der Erfindung erleichtert die Installationsarbeiten und ist mühelos und ohne Aufwendungen einzurichten. Die Funkenschutzeinrichtung gewährt einem mit einer harten PEX-Isolierung versehenen Leiter Schutz gegen Funkenüberschlag, wobei die Installierung dieser Einrichtung mit normalen Werkzeugen durchgeführt werden kann.

## Patentansprüche

1. Funkenschutzeinrichtung für mit einer Isolierschicht versehene Leitungen, insbesondere Freileitungen, mit einem Bodenteil (5) und einem Deckelteil (6), die durch mindestens ein Spannelement (15) gegeneinander verspannbar sind und die mit einem Paar von Backen (7, 8) versehen sind, die zwischen dem Bodenteil (5) und dem Deckelteil (6) einen zu schützenden Leiter aufnehmen, und mit einem separaten Funkenableitelement (2),
**dadurch gekennzeichnet,**
dass mindestens eine Backe (7, 8) mit Zähnen (9, 10) ausgestattet ist, deren Länge wenigstens der Dicke der Isolierschicht des zu schützenden Leiters entspricht, dass als Funkenableitelement ein Funkenableithorn (2) vorgesehen ist, welches an das Bodenteil (5) und/oder das Deckelteil (6) mittels des Spannelements (15) angeklemmt ist, dass das Spannelement (15) ausserdem die Zähne (9, 10) der Backen (7, 8) durch die Isolierschicht des zu schützenden Leiters presst, um einen elektrischen Kontakt zwischen dem zu schützenden Leiter und der Funkenschutzeinrichtung zu bewirken, und dass das Funkenableithorn (2) von dem zu schützenden Leiter genügend weit beabstandet ist, um den elektrischen Funken vom Leiter abzuleiten.

2. Funkenschutzeinrichtung nach Anspruch 1, dadurch gekennzeichnet, dass das Bodenteil (5) und das Deckelteil (6) mit zweiten Backen (11, 12) versehen sind, zwischen denen das Funkenableithorn (2) angeordnet ist.

3. Funkenschutzeinrichtung nach Anspruch 1 oder 2, dadurch gekennzeichnet, dass sich zwischen einem zweiten Paar von Backen (11, 12) eine Zwischenbacke (13) befindet, die mit Hilfe einer Feder (14) gegen die Backe (11) vorgespannt ist, und dass das Funkenableithorn (2) zwischen der Backe (11) des Bodenteils (5) und der Zwischenbacke (13) angeordnet ist.

4. Funkenschutzeinrichtung nach einem der vorhergehenden Ansprüche, dadurch gekennzeichnet, dass die Zwischenbacke (13) und die Backe (12) des Deckelteils (6) ein drittes Backenpaar bilden, zwischen denen ein funkenleitender Draht (3) gehalten ist.

5. Funkenschutzeinrichtung nach einem der vorhergehenden Ansprüche, dadurch gekennzeichnet, dass das Funkenableithorn (2) wenigstens einen Knick (16) aufweist, dessen Winkel im Bereich zwischen 30° und 90° liegt, und die freie Länge des Ableithorns vom Knick (16) bis zu seiner Spitze mindestens 80 mm, vorzugsweise 180 mm, beträgt.

6. Funkenschutzeinrichtung nach einem der vorhergehenden Ansprüche, dadurch gekennzeichnet, dass das Bodenteil (5) und das Deckelteil (6) mit einem zweiten Paar von Backen (11, 12) versehen sind, welche einen funkenleitenden Draht (3) aufnehmen, und dass das zwischen den Backen sich befindende Spannelement (15) beide Backenpaare zusammenpresst.

7. Funkenschutzeinrichtung nach einem der vorhergehenden Ansprüche, dadurch gekennzeichnet, dass das Funkenableithorn (2) mit einer oder mehreren Abkröpfungen (16) versehen und mit dem Bodenteil (5) und/oder Deckelteil (6) derart verbunden ist, dass das äussere Ende des Funkenableithorns einen maximalen Abstand zum Leiter aufweist.

## Claims

1. Spark protection device for insulated conductors, particularly for air lines, comprising a bottom part (5) and a cover part (6) which can be mutually braced by means of at least one clamping element (15) and which are provided with a pair of jaws (7, 8) receiving a conductor to be protected between the bottom part (5) and the cover part (6), and comprising further a separate spark arrestor element (2),
**characterized in that**
at least one jaw (7, 8) is provided with teeth (9, 10) the length of which corresponds at least to the thickness of the insulating layer of the conductor to be protected, that the spark arrestor element is constituted by a spark arrestor horn (2) clamped to the bottom part (5) and/or the cover part (6) by means of the clamping element (15), that the clamping element (15) further acts to urge the teeth (9, 10) of the jaws (7, 8) through the insulating layer of the conductor to be protected in order to establish an electric contact between the conductor to be protected and the spark protection device, and that the spark arrestor horn (2) is spaced from the conductor to be protected a sufficient distance as to direct the electric spark away from the conductor.

2. Spark protection device according to claim 1, characterized in that the bottom part (5) and the cover part (6) are provided with second jaws (11, 12) arranged between the jaws of the spark arrestor horn (2).

3. Spark protection device according to claim 1 or 2, characterized in that an intermediate jaw (13) is arranged between a second pair of jaws (11, 12) and is biased against the jaw (11) by means of a spring (14), and that the spark arrestor horn (2) is arranged between the jaw (11) of the bottom part (5) and the intermediate jaw (13).

4. Spark protection device according to any of the preceding claims, characterized in that the intermediate jaw (13) and the jaw (12) of the cover part (6) form a third pair of jaws holding between them a spark-conducting wire (3).

5. Spark protection device according to any of the preceding claims, characterized in that the spark arrestor horn (2) exhibits at least one bend (16), the angle of the said bend being in the range of between 30° and 90° and the free length of the spark arrestor horn, measured from the bend (16) to its point, being at least 80 mm, preferably 180 mm.

6. Spark protection device according to any of the preceding claims, characterized in that the bottom part (5) and the cover part (6) are provided with a second pair of jaws (11, 12) holding a spark-conducting wire (3), and that the clamping element (15) arranged between the jaws acts to press the two pairs of jaws together.

7. Spark protection device according to any of the preceding claims, characterized in that the spark arrestor horn (2) is provided with one or more bent-off portions (16) and is connected with the bottom part (5) and/or the cover part (6) in such a way that the outer end of the spark arrestor horn is spaced a maximum distance from the conductor.

## Revendications

1. Dispositif pare-étincelles pour lignes munies d'une couche isolante, en particulier des lignes aériennes, comportant une partie fond (5) et une partie couvercle (6), ces deux parties pouvant être serrées mutuellement par au moins un élément de serrage (15) et munies d'une paire de mâchoires (7, 8) lesquelles reçoivent, entre la partie fond (5) et la partie couvercle (6), une ligne à protéger, et comportant un élément (2) dérivateur d'étincelles distinct, caractérisé en ce que, au moins, une mâchoire (7, 8) est munie de dents (9, 10) dont la longueur correspond, au moins, à l'épaisseur de la couche isolante de la ligne à protéger, en ce que, comme élément dérivateur d'étincelles, est prévue une corne (2) de dérivation d'étincelles laquelle est serrée, au moyen de l'élément de serrage (15), sur la partie fond (5) et/ou sur la partie couvercle (6), en ce que, en outre, l'élément de serrage (15) presse les dents (9, 10) de la mâchoire (7, 8) à travers la couche isolante du conducteur à protéger afin d'obtenir un contact électrique entre ce conducteur à protéger et le dispositif pare-étincelles, et en ce que la corne (2) dérivatrice d'étincelles est placée à une distance suffisamment grande du conducteur à protéger pour écarter l'étincelle électrique du conducteur.

2. Dispositif pare-étincelles selon la revendication 1, caractérisé en ce que la partie fond (5) et la partie couvercle (6) sont munies d'une deuxième paire de mâchoires (11, 12) entre lesquelles est disposée la corne (2) de dérivation d'étincelles.

3. Dispositif pare-étincelles selon la revendication 1 ou 2, caractérisé en ce que, entre la deuxième paire de mâchoires (11, 12) se trouve une mâchoire intermédiaire (13) qui est serrée sous une tension initiale contre la mâchoire (11) à l'aide d'un ressort (14), et en ce que la corne (2) de dérivation d'étincelles est disposée entre ladite mâchoire (11) de la partie fond (5) et la mâchoire intermédiaire (13).

4. Dispositif pare-étincelles selon l'une des revendications précédentes, caractérisé en ce que la mâchoire intermédiaire (13) et la mâchoire (12) de la partie couvercle (6) forment une troisième paire de mâchoires entre lesquelles est maintenu un fil (3) conducteur d'étincelles.

5. Dispositif pare-étincelles selon l'une des revendications précédentes, caractérisé en ce que la corne (2) de dérivation d'étincelles présente au moins un coude (16) dont l'angle se situe entre 30 et 90°, la longueur libre de la corne de dérivation, entre le coude (16) et la pointe, étant égale à au moins 80 mm, de préférence à 180 mm.

6. Dispositif pare-étincelles selon l'une des revendications précédentes, caractérisé en ce que la partie fond (5) et la partie couvercle (6) sont munies d'une deuxième paire de mâchoires (11, 12) qui reçoivent un fil (3) conducteur d'étincelles et, en ce que l'élément de serrage (15) se trouvant entre les mâchoires comprime, les unes contre les autres, les deux paires de mâchoires.

7. Dispositif pare-étincelles selon l'une des revendications précédentes, caractérisé en ce que la corne (2) de dérivation d'étincelles est munie d'un ou de plusieurs coudes (16) et est reliée à la partie fond (5) et/ou à la partie couvercle (6) de telle sorte que l'extrémité extérieure de ladite corne présente une distance maximale par rapport au conducteur.
